# EUROPÄISCHE PATENTSCHRIFT

(11) **EP 2 218 657 B1**
(45) Veröffentlichungstag und Bekanntmachung des Hinweises auf die Patenterteilung: **28.11.2012**
(21) Anmeldenummer: 09153024.6
(22) Anmeldetag: 17.02.2009
(51) Int. Cl.: B65D 90/00, B62D 33/04

(54) **Planenaufbau eines Nutzfahrzeugs**
Canvas cover for a commercial vehicle
Superstructure d'un véhicule utilitaire

(43) Veröffentlichungstag der Anmeldung: 18.08.2010
(73) Patentinhaber: Schmitz Cargobull AG, 48341 Altenberge (DE)
(72) Erfinder: Runde, Felix Dipl.-Ing., 48268 Greven (DE)
(74) Vertreter: Cohausz & Florack

(56) Entgegenhaltungen:
- FR-A- 2 109 069
- GB-A- 2 412 649
- GB-A- 2 442 344
- US-A1- 2004 055 345

## Beschreibung

Die Erfindung betrifft einen Planenaufbau eines Nutzfahrzeugs, insbesondere Lastwagens, Anhängers, Sattelaufliegers und/oder Wechselbehälters, mit einem Rahmenelement und einem Verschlusselement zum Verschließen des Planenaufbaus, wobei das Verschlusselement am Rahmenelement befestigt ist.

Nutzfahrzeuge mit Planenaufbauten sind grundsätzlich in verschiedenen Ausführungsformen bekannt und werden für den Transport verschiedener Ladungen eingesetzt. Dabei ist eine Plane des Planenaufbaus regelmäßig nicht direkt mit einem Rahmenelement verbunden, sondern über Verschlusselemente, wie etwa Krampenbänder, am Rahmenelement festgelegt. Das Verschlusselement kann auch als ein entlang einer Plane abgespanntes Stahlseil ausgebildet sein, mit dessen Hilfe ein Durchgreifen durch den Planenaufbau in den Laderaum verhindert wird.

Der Unterschied zwischen dem Rahmenelement und dem Verschlusselement beruht dabei im Wesentlichen darin, dass das Verschlusselement prinzipiell demontiert werden kann, um Zugriff auf den Laderaum zu erhalten, während das Rahmenelement, nicht ohne einen erheblichen Aufwand zu betreiben, demontiert werden kann. Das Verschlusselement stellt also beispielsweise ein Anbauteil dar, während das Rahmenelement Teil der tragenden Struktur des Planenaufbaus sein kann.

Planenaufbauten können daher in der Regel nicht so zuverlässig verschlossen werden, dass ein unbefugter Zugriff in den Laderaum und damit auf die Ladung ausgeschlossen ist. Es kann daher gewünscht sein, dass die Planenaufbauten nach dem ordnungsgemäßen Verschließen nicht mehr, ohne sichtbare Spuren zu hinterlassen, geöffnet und wieder verschlossen werden können. Auf diese Weise kann eine erfolgte Manipulation der Ladung nachträglich festgestellt werden.

Entsprechend gesicherte Planenaufbauten werden beispielsweise von Zollbehörden gefordert, um illegale grenzüberschreitende Warentransporte zu unterbinden. Man spricht in diesem Zusammenhang allgemein von zollsicheren Nutzfahrzeugaufbauten. Planenaufbauten der genannten Art könnten bedarfsweise aber auch ohne eine Vorschrift oder Zulassung einer Zollbehörde ganz allgemein genutzt werden, um Ladungen während des Transports gegenüber einem unbefugten Zugriff zu sichern. Für den Empfänger einer Warenlieferung ist dann etwa ersichtlich, ob die Ladung im ursprünglichen Zustand ist, oder ob eine Manipulation vorgenommen worden ist.

Nachteilig bei den bekannten Planenaufbauten ist, dass eine Manipulation der Ladung, wenn überhaupt, nur durch aufwändige Maßnahmen, wie etwa das Verschweißen der zum Fixieren der Verschlusselemente vorgesehenen Schraubverbindungen, verhindert werden kann. Diese Maßnahmen lassen die Fertigungskosten der Planenaufbauten nennenswert ansteigen.

Daher liegt der vorliegenden Erfindung die Aufgabe zu Grunde, einen Planenaufbau der eingangs genannten und zuvor näher beschriebenen Art derart auszugestalten und weiterzubilden, dass der Planenaufbau einerseits gegenüber einem unbefugten Zugriff auf den Laderaum gesichert und andererseits kostengünstig herzustellen ist.

Die zuvor genannte Aufgabe ist bei einem Planenaufbau nach dem Oberbegriff des Anspruchs 1 dadurch gelöst, dass ein Sicherungsmittel vorgesehen ist, das beim Trennen des Verschlusselements vom Rahmenelement unter Hinterlassung sichtbarer Spuren beschädigt wird, dass das Sicherungsmittel wenigstens ein Verbindungsmittel zum Verbinden wenigstens zweier Bauteile des Planenaufbaus miteinander umfasst und dass das Verbindungsmittel von einem Innenraum des Planenaufbaus gesichert ist.

Es ist also ein Planenaufbau eines Nutzfahrzeugs vorgesehen, bei dem eine Plane und damit letztlich der Planenaufbau an sich mittels eines Verschlusselements verschlossen werden kann. Das Verschlusselement ist dabei an einem Rahmenelement befestigt, das ein tragendes Element des Planenaufbaus und/oder des Nutzfahrzeugs sein kann. Dabei ist der Begriff Rahmenelement nicht auf typische Rahmenstrukturen beschränkt, auch wenn es sich vorzugsweise um ein Teil eines äußeren Rahmens des Planenaufbaus bzw. Nutzfahrzeugs handelt.

Im Gegensatz zum Verschlusselement handelt es sich beim Rahmenelement um ein Bauteil, das nicht, nicht ohne einen erheblichen Aufwand oder nicht ohne Spuren zu hinterlassen entfernt, abmontiert oder teilweise gelöst werden kann, so dass unbefugte Personen Zugriff auf den Laderaum des Nutzfahrzeugs erhalten. Unter einem erheblichen Aufwand wird dabei ein solcher verstanden, der von unbefugten Personen regelmäßig nicht in Kauf genommen wird oder am Ort der Manipulation nicht aufgebracht werden kann, um die Ladung des Nutzfahrzeugs zu manipulieren. Das Rahmenelement ist daher vorzugsweise ein tragendes Bauteil des Planenaufbaus bzw. des Nutzfahrzeugs.

Der Planenaufbau wird vorzugsweise von Zollbehörden trotz der prinzipiellen Möglichkeit einer nachträglich nicht zu erkennenden Manipulation als zollsicher eingestuft. Dies ist jedoch nicht zwingend erforderlich, da das Sicherungsmittel auch zum Schutz der Ladung vor unbefugtem Zugriff verwendet werden kann, wenn das Sicherungsmittel nicht als Zollsicherung zugelassen ist. Es ist jedoch grundsätzlich bevorzugt, wenn das Sicherungsmittel eine von einer Zollbehörde zugelassene Zollsicherung ist.

Der Laderaum bzw. die Ladung des Planenaufbaus wird durch die Verwendung des Sicherungsmittels vor einem unbefugten Zugriff geschützt. Es wird verhindert, dass das Verschlusselement vom Rahmenelement entfernt werden kann, ohne das Sicherungsmittel zu beschädigen. Die Beschädigung ist dabei dergestalt, dass die erfolgte Manipulation bei einer späteren Kontrolle des Planenaufbaus ohne weiteres zu erkennen ist.

Damit das Sicherungsmittel nach dem Öffnen des Planenaufbaus selbst nicht durch ein neues unbeschädigtes Sicherungsmittel ersetzt werden kann, weist das Sicherungsmittel wenigstens ein Verbindungsmittel auf, das am Planenaufbau festgelegt ist. Dabei ist das Verbindungsmittel von einem Innenraum des Planenaufbaus gesichert. Das Verbindungsmittel ist in diesem Innenraum des Planenaufbaus nicht von außen zugänglich, so dass das Verbindungsmittel nach dem unbefugten Öffnen des Planenaufbaus nicht von innen gesichert werden kann. Entweder ist der Innenraum überhaupt unzugänglich oder lediglich bei geöffnetem Laderaum zugänglich. Das Verbindungsmittel kann also so angebracht sein, dass das Verbindungsmittel prinzipiell von einer unbefugten Person von innen gesichert werden kann. Die das Verbindungsmittel sichernde Person kann dann den Innenraum aber nicht mehr ohne weiteres verlassen. Um dies zu gewährleisten können bedarfsweise weitere Bauteile des Planenaufbaus gegenüber unbefugtem Zugriff gesichert sein.

Unter dem Sichern des Verbindungsmittels wird folglich ein aktives Sichern des Verbindungsmittels vom Innenraum verstanden. Mit anderen Worten ist wenigstens ein Montageschritt zur Sicherung des Verbindungsmittels nötig, der vom Innenraum aus durchzuführen ist, aber von unbefugten Personen, nicht ohne erkennbare Spuren zu hinterlassen, durchführt werden kann.

Bei einer ersten Ausgestaltung des Planenaufbaus ist das wenigstens eine Verbindungsmittel vom Laderaum des Planenaufbaus aus gesichert. Dies hat den Vorteil, dass das Verbindungsmittel einfach bestimmungsgemäß montiert werden kann. Es kann aber auch vorgesehen sein, dass das Verbindungsmittel von einem Innenraum eines Strukturelements des Planenaufbaus gesichert ist. Hier kommt etwa das Innere eines im Wesentlichen geschlossenen Profils in Frage. Dann ist aber auch die bestimmungsgemäße Montage des Verbindungsmittels erschwert. Diesem kann dadurch begegnet werden, dass der Innenraum vom Laderaum aus gut zugänglich ist oder dass eine Öffnung zum Vorsehen des Sicherungsmittels im Strukturelement nach dem Anbringen des Sicherungsmittels beispielsweise durch Verschweißen verschlossen wird. Wenn der Innenraum nicht durch den Laderaum gebildet wird, kann der Innenraum beispielsweise vom Rahmenelement selbst gebildet werden, was zu einer konstruktiv einfachen Ausgestaltung des Planenaufbaus führen kann.

Um das Verbindungsmittels problemlos vom Laderaum aus sichern zu können, kann das Verbindungsmittel über dem Ladeboden des Laderaums angeordnet sein. Es kann dann beispielsweise darauf verzichtet werden, Vertiefungen in den Ladeboden einzubringen, um die Zugänglichkeit des Verbindungsmittels von Laderaum zu gewährleisten. Diese Ausgestaltung kann jedoch aus Platzgründen und/oder wegen einer besseren Zugänglichkeit des Ladebodens dennoch bevorzugt sein.

Bei dem Verschlusselement kann es sich um ein Krampenband handeln, an dem eine Plane befestigt wird. Das Krampenband weist eine Mehrzahl von Krampen auf, auf die in der zu befestigenden Plane vorgesehene Ösen aufgeschoben werden. Die auf diese Weise aufgesteckte Plane wird gesichert, indem durch die Krampen auf der Außenseite der Plane ein Seil oder dergleichen hindurchgezogen wird. Der Planenaufbau kann auch eine Mehrzahl von Krampenbändern aufweisen. Es kann auch vorgesehen sein, dass jede Krampe des Planenaufbaus für sich ein Verschlusselement bildet, etwa wenn die Krampen nicht an Krampenbändern zusammengefasst sind. Dies ist aber weniger bevorzugt, weil dann gegebenenfalls jeder Krampe auch wenigstens ein Sicherungsmittel zugeordnet werden müsste, während ein Krampenband insgesamt mit lediglich einem Sicherungsmittel oder wesentlich weniger Sicherungsmitteln auskommen kann.

Das Krampenband kann beispielsweise direkt an einem Außenrahmen des Nutzfahrzeugs befestigt sein. Das Krampenband kann aber auch an einer Bordwand des Nutzfahrzeugs vorgesehen sein, wobei die Bordwand zum Schließen und Öffnen des Planenaufbaus nach oben und unten geschwenkt werden kann. Die Bordwand wird regelmäßig nur einen Teil der Höhe der Seitenwand des Planenaufbaus einnehmen. Oberhalb der Bordwand wird der Planenaufbau durch die Plane verschlossen. Bedarfsweise kann das Rahmenelement durch die Bordwand gebildet sein. Alternativ kann das Verschlusselement aber auch als Bordwand des Nutzfahrzeugs ausgebildet sein, so dass das Rahmenelement beispielsweise durch einen Außenrahmen des Ladebodens gebildet wird, an dem die Bordwand gegenüber Manipulationen gesichert befestigt ist.

Alternativ oder zusätzlich kann das Verschlusselement eine Durchgriffssicherung sein, die verhindert, dass durch den Planenaufbau von außen in den Laderaum des Nutzfahrzeugs eingegriffen werden kann. Der Eingriff in den Laderaum kann beispielsweise unter einer Plane hindurch erfolgen. Aufgrund der Durchgriffssicherung muss die Plane nicht über ihre gesamte Länge befestigt werden, ohne dass dadurch zwischen den Befestigungspunkten der Plane ein Zugriff auf den Laderaum ermöglicht wird.

Für den Fall, dass das Dach des Planenaufbaus aufgeschoben werden kann und die Durchgriffssicherung zur Sicherung des Dachs vorgesehen ist, ist die Durchgriffssicherung vorzugsweise an einem Dachquerholm befestigt, der zum Öffnen des Dachs entlang des Nutzfahrzeugs verschoben werden kann. Man spricht in diesem Zusammenhang auch von einem Schiebeverdeck des Nutzfahrzeugs. Der Dachquerholm kann dabei in einer geschlossenen Stellung sicher mit dem Rückwandrahmen verriegelt sein. Das Entriegeln des Dachquerholms kann dann vorzugsweise trotz der angebrachten Durchgriffssicherung durch eine Schwenkbewegung des Dachquerholms nach oben erfolgen.
Eine konstruktiv einfache Lösung ergibt sich, wenn die Durchgriffssicherung im Wesentlichen als Seil ausgebildet ist, das zum Zwecke der Straffung vorgespannt sein kann. Das Seil kann zudem mit der Plane verbunden sein. Dabei bietet es sich an, wenn das Seil durch einen Saum der Plane geführt ist. Bei der Plane kann es sich sowohl um eine am Dach des Planenaufbaus vorgesehene Verdeckplane als auch um eine seitlich am Planenaufbau vorgesehene Seitenplane handeln. Es bietet sich aus Gründen der Stabilität und Langlebigkeit an, wenn es sich bei dem Seil um ein Stahlseil handelt. Es kommen bedarfsweise aber auch Seile aus anderen Materialien wie etwa Kunststoff in Frage.

Bei einer Ausgestaltung des Planenaufbaus ist das wenigstens eine Verbindungsmittel als Vollniet, Bolzen oder Schraube ausgebildet. Im Falle eines Bolzens ist insbesondere die Verwendung eines Schließringbolzens bevorzugt. Diese Verbindungsmittel lassen sich schnell und einfach montieren. Zudem lassen sich diese Verbindungsmittel ohne weiteres vom Innenraum des Planenaufbaus sichern. Im Falle des Bolzens kommen beispielsweise Splinte oder bekannte Wellensicherungen zur Sicherung in Frage. Die Wellensicherungen können dabei beispielsweise zur kraftschlüssigen oder formschlüssigen Sicherung des Bolzens ausgebildet sein. Wird eine Schraube verwendet, wird diese vorzugsweise vom Innenraum mit einer entsprechenden Mutter gekontert. Alternativ oder zusätzlich kann das Verbindungsmittel auch im Innenraum verschweißt werden. Dies ist jedoch regelmäßig mit einem höheren Aufwand verbunden.

Es kann vorgesehen sein, dass das wenigstens eine Verbindungsmittel von außen angebracht werden muss. Dies ist jedoch nicht zwingend erforderlich, wenn das Verbindungsmittel ein Vollniet ist. Ein Vollniet kann prinzipiell auch von innen eingesteckt sein, da der Vollniet anschließend dennoch nicht von außen montiert werden kann, ohne dass eine Sicherung von innen erfolgt. Die Verwendung eines Vollniets ist deshalb und aus fertigungstechnischer Sicht bevorzugt.

Bei einer Ausgestaltung des Planenaufbaus ist das Sicherungsmittel durch das Verbindungsmittel gegeben. Es sind also keine weiteren Bauteile erforderlich, um ein gegenüber Manipulationen gesichertes Verschlusselement bereitzustellen.

Um den konstruktiven Aufwand gering zu halten, kann das Verbindungsmittel das Verschlusselement und das Rahmenelement miteinander verbinden. Das Verschlusselement kann dann nicht vom Rahmenelement getrennt werden, ohne das Verbindungsmittel erkennbar zu beschädigen. In diesem Zusammenhang ist es weiter bevorzugt wenn das Rahmenelement wenigstens bereichsweise über den Ladeboden nach oben ragt, um das wenigstens eine Verbindungsmittel oberhalb des Ladebodens anzuordnen. Das Verbindungsmittel kann dann problemlos vom Laderaum aus gesichert werden.

Bei einer alternativen Ausgestaltung des Planenaufbaus kann das Verschlusselement mit wenigstens einem Befestigungsmittel am Rahmenelement befestigt sein, wobei das Sicherungsmittel eine das Befestigungsmittel derart abdeckende Abdeckung umfasst, dass ein Entfernen des Befestigungsmittels von außen ohne sichtbare Beschädigung der Abdeckung verhindert ist und wobei die Abdeckung über das wenigstens eine Verbindungsmittel am Planenaufbau festgelegt ist. Eine entsprechende Ausgestaltung bietet sich an, wenn das Verbindungsmittel nicht mit dem Verschlusselement und dem Rahmenelement verbunden und gleichzeitig von einem unzugänglichen Innenraum gesichert werden kann.

Aufgrund der Verbindung des Verschlusselements mit dem Rahmenelement über das wenigstens eine Befestigungsmittel müsste das Befestigungsmittel gelöst werden, um Zugriff auf den Laderaum des Nutzfahrzeugs zu erhalten. Es spielt dabei prinzipiell keine Rolle, ob über das Befestigungsmittel eine lösbare oder unlösbare Verbindung hergestellt wird. Es ist auch unerheblich, ob das Befestigungsmittel ausschließlich von außen montierbar ist oder ob das Befestigungsmittel von einem Innenraum gesichert werden muss. Der unbefugte Zugriff auf den Laderaum wird nämlich durch das Sicherungsmittel verhindert. Dennoch können einzelne der genannten Ausführungsformen bevorzugt sein.

Die Abdeckung deckt das Befestigungsmittel in einer Weise ab, dass der Zugang zum Befestigungsmittel, etwa zum Zwecke des Lösens der Verbindung, so weit einschränkt ist, dass die Abdeckung beim Entfernen des Befestigungsmittels Schaden nimmt, der bei einer späteren Prüfung erkennbar auffällt. Ein unbefugtes Lösen an sich muss die Abdeckung nicht verhindern können. Die Abdeckung kann also einfach und kostengünstig ausgebildet werden. In diesem Zusammenhang versteht sich, dass die Abdeckung des Befestigungsmittels nicht vollständig abdecken muss. Ein teilweises Abdecken ist prinzipiell ausreichend. Auch muss die Abdeckung nicht in Kontakt mit dem Befestigungsmittel stehen. Allerdings wird die Abdeckung insbesondere eine äußere Abdeckung sein, die das Befestigungsmittel von einer Außenseite des Nutzfahrzeugs bzw. des Planenaufbaus abdeckt, da eine Manipulation des Planenaufbaus regelmäßig von außen erfolgen wird.

Ein besonderer Vorteil bei der Verwendung eines Sicherungsmittels mit einer das wenigstens eine Befestigungsmittel abdeckenden Abdeckung liegt darin, dass das Verbindungsmittel lediglich die Abdeckung am Planenaufbau festlegen muss. Dadurch wird eine höhere Flexibilität hinsichtlich der Anordnung des Verbindungsmittels erreicht. Es ist also denkbar, dass das Verbindungselement an einer Position des Planenaufbaus vorgesehen ist, an der keine direkte Verbindung zwischen dem Verschlusselement und dem Rahmenelement möglich ist. Mit anderen Worten findet eine Entkoppelung von der Befestigung des Verschlusselements und der Befestigung der Abdeckung statt.

Je nachdem wo das Verschlusselement montiert und/oder wie das Verschlusselement ausgebildet ist, kann es ausreichend sein, wenn die Abdeckung über das wenigstens eine Verbindungsmittel am Verschlusselement befestigt ist. Dies kann insbesondere dann zweckmäßig sein, wenn das Verschlusselement ein Krampenband, etwa ein Krampenband mit einer über den Ladeboden überstehenden Palettenanschlagsleiste, ist. Eine Verbindung der Abdeckung mit weiteren Bauteilen des Nutzfahrzeugs ist nicht zwingend erforderlich.

Alternativ oder zusätzlich kann aber auch vorgesehen sein, dass die Abdeckung über das wenigstens eine Verbindungsmittel am Rahmenelement befestigt ist, ohne dass das Verbindungsmittel gleichzeitig mit dem Verschlusselement verbunden sein muss. Dies bietet sich an, wenn die Befestigung der Abdeckung am Verschlusselement etwa aufgrund der Formgebung oder des Materials des Verschlusselements nicht ohne weiteres oder nicht dauerhaft möglich ist. Dies gilt etwa für den Fall, dass das Verschlusselement als Seil ausgebildet ist.

Um eine einfache, schnelle und kostengünstige Montage des Befestigungsmittels zu erreichen, bietet es sich an, einen Blindniet oder eine Schraube als Befestigungsmittel zu verwenden. Im Falle einer Schraube, ist diese vorzugsweise von außen gesetzt und mit einer Kappe nach Art einer Mutter gekontert. Dabei ist die Kappe verdrehsicher angeordnet, so dass die Verbindung nicht durch Drehen der Kappe gelöst werden kann. Eine Verwendung von Befestigungsmitteln, wie etwa Bolzen und Vollnieten, welche von außen gesetzt werden können und von einer Innenseite gesichert werden müssen, ist prinzipiell möglich, wenn der in der Regel höhere Montageaufwand gerechtfertigt ist.

Damit die Abdeckung des Sicherungsmittels nicht um das Verbindungsmittel beiseite geschwenkt werden kann, um die Zugänglichkeit des Befestigungsmittels herzustellen, bietet es sich an, wenn die Abdeckung an wenigstens zwei unterschiedlichen Stellen am Planenaufbau festgelegt ist. Dies kann etwa dadurch geschehen, dass die Abdeckung über das wenigstens eine Verbindungsmittel einerseits und das Befestigungsmittel andererseits am Planenaufbau festgelegt ist. Dann kann das ohnehin vorgesehene Befestigungsmittel nicht nur zur Befestigung des Verschlusselements, sondern auch zum Festlegen der Abdeckung am Planenaufbau, insbesondere am Verschlusselement und/oder am Rahmenelement, genutzt werden. Damit wird beispielsweise die Verwendung eines weiteren, insbesondere eines zweiten, Verbindungsmittels des wenigstens einen Sicherungsmittels entbehrlich.

Alternativ oder zusätzlich kann jedoch auch vorgesehen werden, dass das Sicherungsmittel wenigstens zwei die Abdeckung am Planenaufbau festlegende Verbindungsmittel umfasst, wenn dies zu einer konstruktiv einfacheren Ausgestaltung führt oder eine Manipulation sicherer verhindert. Dabei kann jedes Verbindungsmittel bedarfsweise am Rahmenelement und/oder am Verschlusselement festgelegt sein.

Bei dem Planenaufbau handelt es sich vorzugsweise aber nicht zwingend um einen sogenannten zollsicheren Planenaufbau, der von einer Zollbehörde zur Vermeidung illegaler grenzüberschreitender Warentransporte zugelassen bzw. abgenommen ist.

Die Erfindung wird nachfolgend anhand einer lediglich Ausführungsbeispiele aufweisenden Zeichnung näher erläutert. In der Zeichnung zeigt
- Fig. 1: ein Nutzfahrzeug mit einem ersten Ausführungsbeispiel eines erfindungsgemäßen zollsicheren Planenaufbau.
- Fig. 2: die Befestigung eines Krampenbands an einem Außenrahmen des Planenaufbaus aus Fig. 1,
- Fig. 3: die Befestigung des Krampenbands aus Fig. 2 in einer Schnittansicht entlang der Ebene III-III aus Fig. 2,
- Fig. 4: eine zollsichere Befestigung einer Durchgriffssicherung an einem Dachquerholm des Planenaufbaus aus Fig. 1,
- Fig. 5: die Befestigung der Durchgriffssicherung aus Fig. 4 in einer Schnittansicht entlang der Ebene V-V aus Fig. 4,
- Fig. 6: die Befestigung eines Krampenbands an einem Außenrahmen einer zweiten Ausführungsform des erfindungsgemäßen Planenaufbaus in einer Schnittansicht quer zum Nutzfahrzeug und
- Fig. 7: die Befestigung eines Krampenbands aus Fig. 6 in einer Schnittansicht entlang der Ebene VII-VII aus Fig. 6.

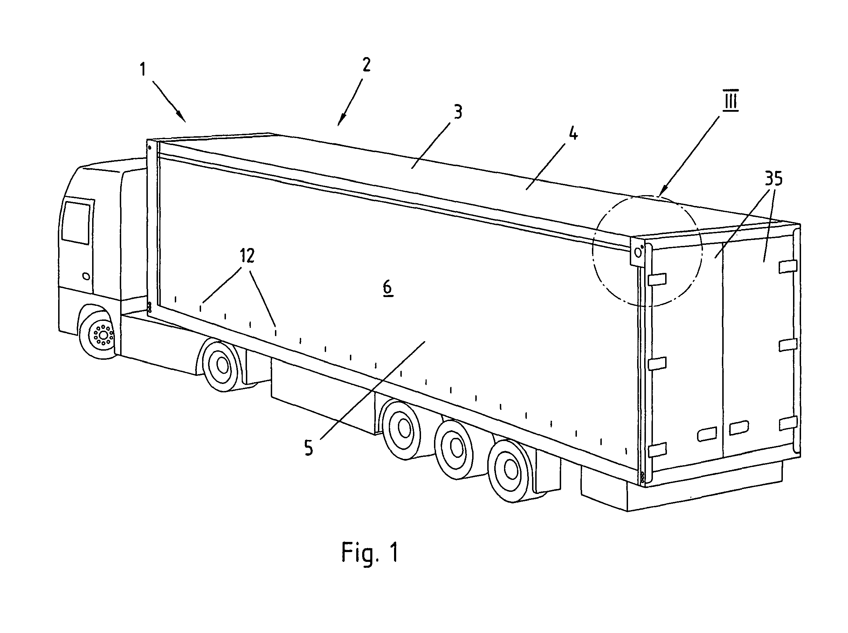

In der Fig. 1 ist ein Nutzfahrzeug 1 in Form eines Sattelaufliegers mitsamt dem zugehörigen Zugfahrzeug dargestellt. Das Nutzfahrzeug 1 umfasst dabei einen zollsicheren Planenaufbau 2, der eine Plane 3 am Dach 4 und jeweils eine Plane 5 an den Seiten 6 des Planenaufbaus 2 aufweist. Die Planen 3,5 sind dabei derart festgelegt, dass eine Manipulation der Ladung durch unbefugte Personen zu einer erkennbaren Beschädigung des Planenaufbaus 2 führt. Im Bereich des Ladebodens 7 des Laderaums 8 des Nutzfahrzeugs sind die seitlichen Planen 5 über als sogenannte gekröpfte Krampenbänder ausgebildete Verschlusselemente 9 an einem als Außenrahmen des Ladebodens 7 ausgebildeten Rahmenelement 10 befestigt. Das Verschlusselement 9 weist zu diesem Zwecke eine Reihe von zueinander beabstandeten Krampen 11 auf, auf welche entsprechend ausgebildete Ösen 12 der Plane 5 aufgeschoben werden können. Die Plane 5 wird durch ein Seil am Verschlusselement 9 fixiert, das auf der Außenseite der Plane 5 durch die Krampen 11 gezogen und am Nutzfahrzeug 1 festgelegt wird.

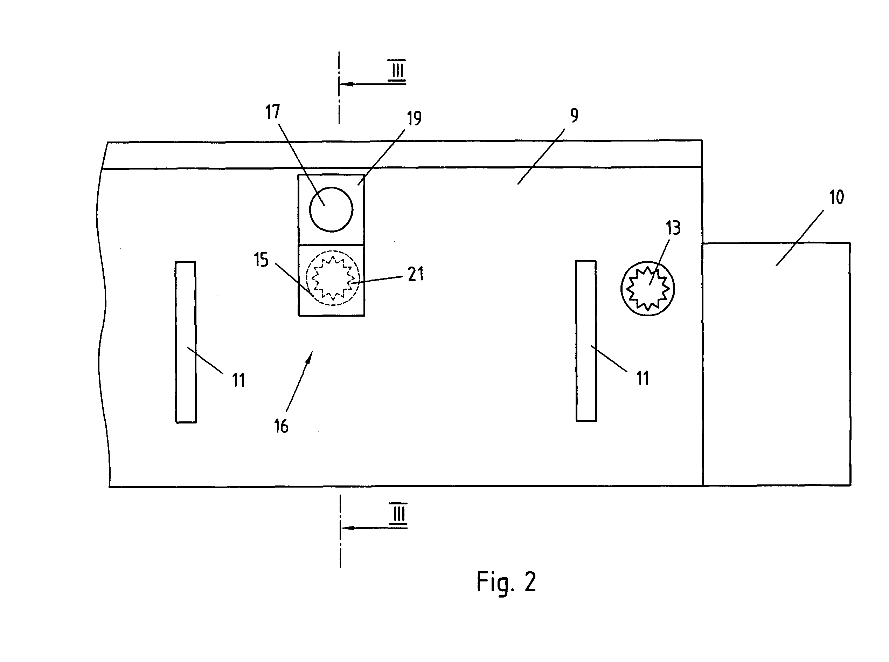

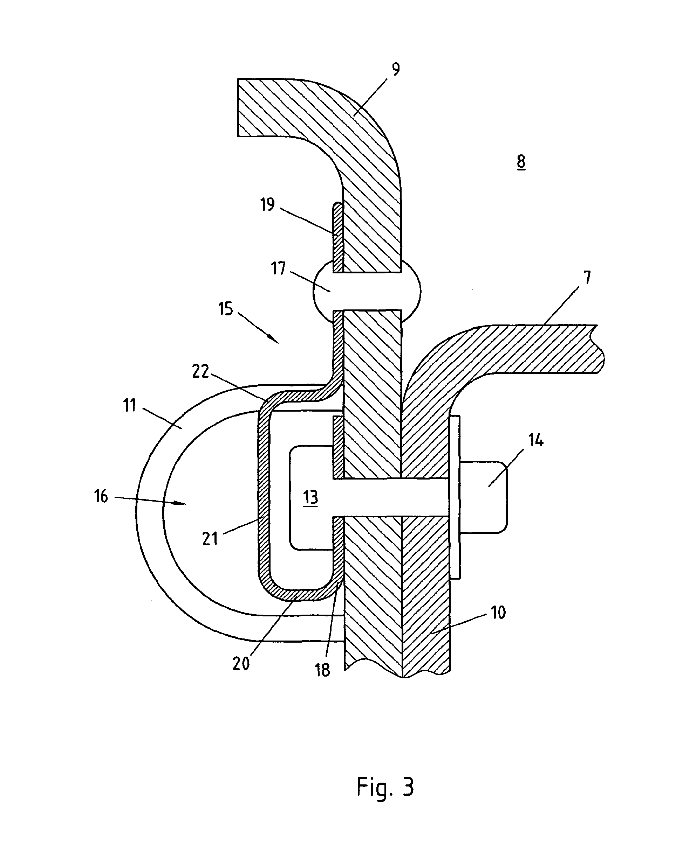

Das Verschlusselement 9 in Form eines Krampenbands ist mit einer Mehrzahl von Befestigungsmitteln 13 am Rahmenelement 10 befestigt, wie dies in den Fig. 2 und 3 unter Weglassung der Plane 5 und des Seils im Detail dargestellt ist. Bei dem dargestellten und insoweit bevorzugten Planenaufbau 2 handelt es sich bei den Befestigungsmitteln 13 um Schrauben, die von der Außenseite des Verschlusselements 9 angebracht und mit den innen liegenden Enden der Schrauben in Kappen 14 verschraubt sind. Die Kappen 14 sind aufgrund entsprechend ausgebildeter Flansche und der Nähe zu einer Biegung des Rahmenelements 10 verdrehsicher angebracht, um ein Abdrehen der Kappen 14 zu verhindern.

Zwei der Befestigungsmittel 13 ist beim dargestellten Planenaufbau ein Sicherungsmittel 15 zugeordnet. Dadurch wird verhindert, dass das Verschlusselement 9 für einen Zugriff auf den Laderaum 8 um lediglich ein Sicherungsmittel 15 gedreht werden kann, ohne dass Sicherungsmittel 15 dabei zu beschädigen. Das dargestellte Sicherungsmittel 15 weist eine Abdeckung 16 und ein Verbindungsmittel 17 auf, wobei die Abdeckung 16 das Befestigungsmittel 13 von außen abdeckt, so dass das Befestigungsmittel 13 von außen nicht ohne weiteres zugänglich ist. Die Abdeckung 16 ist so angeordnet, dass die Abdeckung 16 entfernt oder jedenfalls beschädigt werden muss, um das abgedeckte Befestigungsmittel 13 zu lösen und dadurch Zugriff auf den Laderaum 8 zu erhalten. Durch eine Beschädigung der Abdeckung 16 kann zu einem späteren Zeitpunkt festgestellt werden, dass eine Manipulation der Ladung stattgefunden hat. Wenn die Abdeckung 16 mitsamt dem Verbindungselement 17 entfernt wird, kann die Abdeckung 16 oder eine entsprechende Ersatzabdeckung nachträglich nicht mehr montiert werden, sofern der Laderaum 8 des Nutzfahrzeugs 1 wieder verschlossen werden soll. Da das Verschlusselement 9 noch mit Hilfe des nicht dargestellten Seils an der in den Fig. 2 und 3 nicht dargestellten seitlichen Plane 5 befestigt ist, kann ein neu zu montierendes Verbindungsmittel 17 nicht vom Laderaum 8 aus gesichert werden, wenn dies nicht zum Einschließen einer Person im Laderaum 8 führen soll.

Bei dem dargestellten Planenaufbau 2 ist das Verbindungsmittel 17 als Vollniet ausgebildet, der von einem Innenraum des Planenaufbaus 2 gesichert ist. Bei diesem Innenraum handelt es sich vorliegend um den Laderaum 8 des Planenaufbaus 2. Daher ist das Verbindungsmittel 17 oberhalb des Ladebodens 7 angeordnet. Neben dem Verbindungsmittel 17 ist die Abdeckung 16 auch über das Befestigungsmittel 13 am Verschlusselement 9 befestigt. In der Abdeckung 16 ist jeweils eine Öffnung zum Durchstecken des Verbindungsmittels 17 und des Befestigungsmittels 13 vorgesehen. Die beiden Öffnungen sind ferner an gegenüberliegenden Endabschnitten 18,19 der Abdeckung 16 vorgesehen. Angrenzend zu dem durch das Befestigungsmittel 13 festgelegten Endabschnitt 18 der Abdeckung 16 ist die Abdeckung 16, die aus einem Blechstreifen gefertigt ist, U-förmig umgebogen. Diesem U-förmig umgebogenen Abschnitt 20 schließt sich ein Mittelabschnitt 21 an, der außen über das Befestigungsmittel 13 übergreift. Der Mittelabschnitt 21 ist über einen S-förmig gebogenen Abschnitt 22 mit dem durch das Verbindungsmittel 17 festgelegten Endabschnitt 19 verbunden. Die S-förmige Biegung der Abdeckung 16 führt dabei dazu, dass der entsprechende Endabschnitt 19 plan an dem Verschlusselement 9 anliegt.

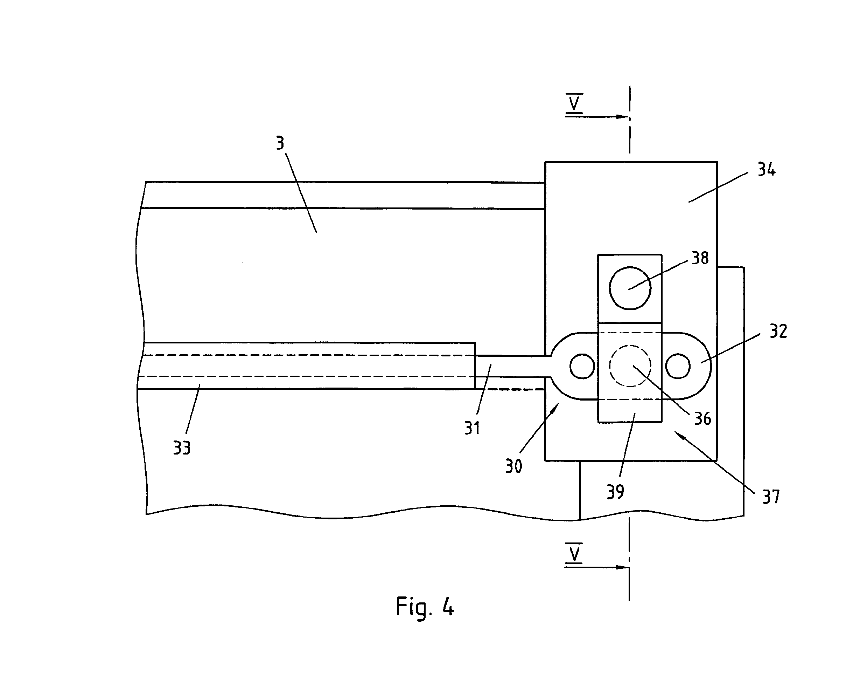

Bei dem in der Fig. 4 dargestellten Verschlusselement 30 handelt es sich um eine Durchgriffssicherung in Form eines Stahlseils 31, an dessen einem Ende ein sogenanntes Augterminal 32 vorgesehen ist, mit dessen Hilfe das Stahlseil 31 vorgespannt werden kann. Das vorgespannte Stahlseil 31 ist in einem Saum 33 der am Dach 4 angeordneten Plane 3 angeordnet und verhindert so, dass unbefugte Personen von außen unter den Überhang der Plane 3 an der Seite 6 des Nutzfahrzeugs 1 und letztlich in den Laderaum 8 hineingreifen können.

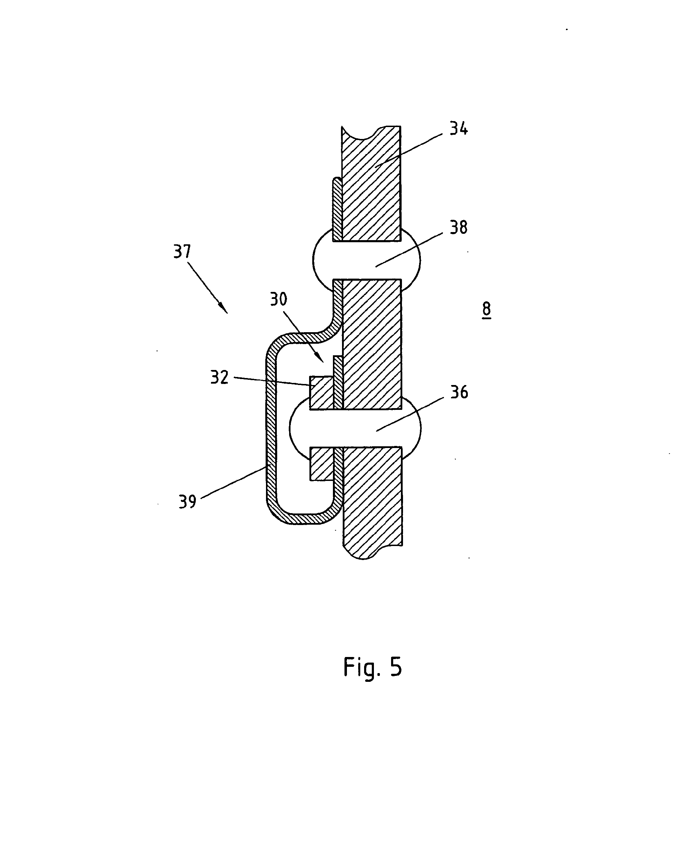

Das Verschlusselement 30 ist mit einem als Dachquerholm ausgebildeten Rahmenelement 34 verbunden, der im verschlossenen Zustand des Planenaufbaus 2 mit den Rückwandtüren 35 verriegelt ist und im geöffneten Zustand entlang eines Dachlängsholms verschoben werden kann. Zur Verbindung des Verschlusselements 30 mit dem Rahmenelement 34 ist ein Befestigungsmittel 36 von außen durch eine Öffnung des Augterminals 32 sowie durch eine Öffnung im Rahmenelement 34 hindurch gesteckt. Dies ist insbesondere in der Fig. 5 dargestellt. Bei dem dargestellten Befestigungsmittel 36 handelt es sich um einen Blindniet, der problemlos von außen montiert werden kann. Der Blindniet legt jedoch nicht nur das Augterminal 32 des Stahlseils 31, sondern auch ein Sicherungsmittel 37 am als Dachquerholm ausgebildeten Rahmenelement 34 fest.

Das Sicherungsmittel 37 umfasst beim dargestellten Planenaufbau 2 ein als Vollniet ausgebildetes Verbindungsmittel 38 und eine Abdeckung 39, die vergleichbar zu der in der Fig. 3 dargestellten Abdeckung 16 ausgebildet ist. Die Abdeckung 39 ist ebenfalls derart umgebogen, dass die Abdeckung 39 das Befestigungsmittel 36 von außen abdeckt, d.h. vorliegend quer über das gesamte äußere Ende des Befestigungsmittels 36 verläuft.

Das nicht von dem Befestigungsmittel 36 fixierte Ende der Abdeckung 39 wird vom Verbindungsmittel 38 am als Dachquerholm ausgebildeten Rahmenelement 34 festgelegt und nicht an dem als Stahlseil 31 ausgebildeten Verschlusselement 30. Das innere Ende des Verbindungsmittels 38 ragt in den Laderaum des Nutzfahrzeugs 1 hinein und ist vom Laderaum 8 aus gesichert.

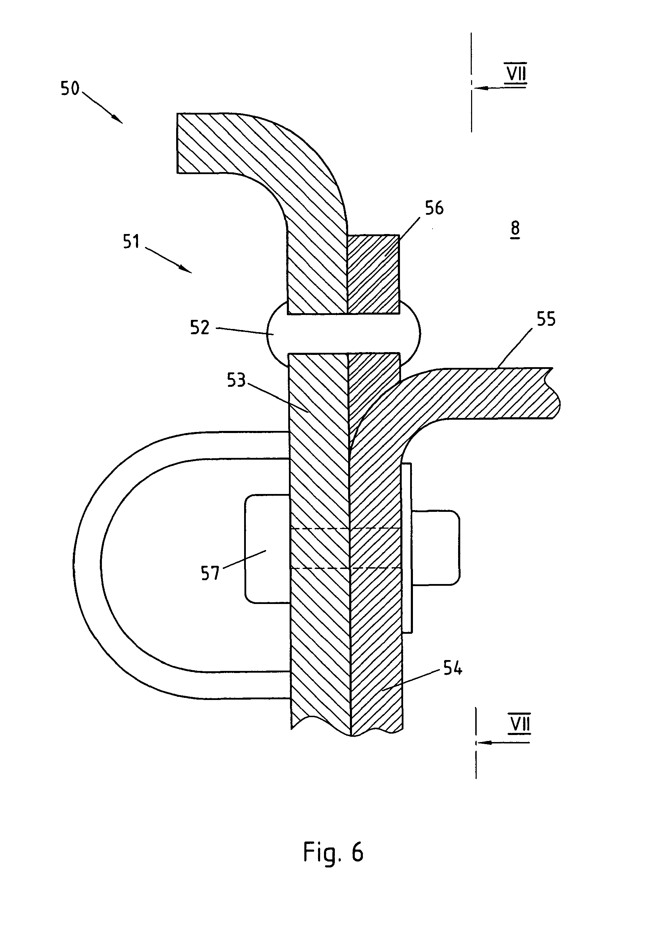

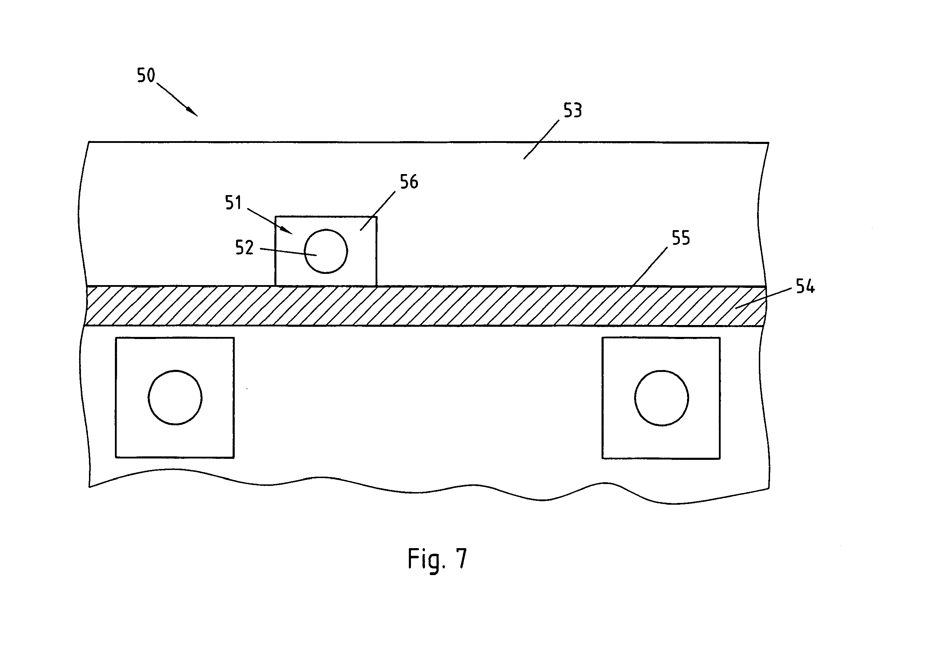

Bei einer alternativen Ausgestaltung des Planenaufbaus 50 wird auf die Verwendung einer Abdeckung verzichtet. Das Sicherungsmittel 51 besteht bei diesem in den Fig. 6 und 7 dargestellten Ausführungsbeispiel lediglich aus einem Verbindungsmittel 52, das von einer Innenseite des Planenaufbaus 50 gesichert ist. Bei dem dargestellten Verbindungsmittel 52 handelt es sich um einen Vollniet, der durch ein als Krampenband ausgebildetes Verschlusselement 53 hindurchgeführt ist und das Verschlusselement 53 direkt mit dem Rahmenelement 54 verbindet. Das Verbindungsmittel 52 muss entfernt werden, wenn das Verschlusselement 53 vom Rahmenelement 54 getrennt werden soll, um Zugriff auf den Laderaum zu erhalten. Das Verbindungsmittel 52 kann aber nachträglich nicht neu angebracht werden, da das Verbindungsmittel 52 vom Innenraum des Planenaufbaus 50 nicht gesichert werden kann. Auch in diesem Fall entspricht der Innenraum dem Laderaum des Nutzfahrzeugs. Um das Verbindungsmittel 52 über dem Niveau des Ladebodens 55 anbringen zu können, weist das das Verschlusselement 53 tragende Rahmenelement 54 eine nach oben abstehende Lasche 56 auf, die sich in einen Bereich oberhalb des Niveaus des Ladebodens 55 erstreckt. Dort ist das Verschlusselement 53 mit dem Verbindungselement 52 am Rahmenelement 54 befestigt.

Bei der in den Fig. 6 und 7 dargestellten Sicherung des als Krampenband ausgebildeten Verschlusselements 53 reicht ein Sicherungsmittel 51 in Form eines vom Innenraum zu sichernden Verbindungselements 52 aus. Zudem können noch konventionelle Befestigungsmittel 57 zum Anbringen des Verschlusselements 53 am Rahmenelement 54 vorgesehen sein. Deshalb ist auch eine recht schmale Lasche 56 ausreichend. Anstelle der Lasche 56 könnte natürlich auch eine sich über die gesamte Länge des Rahmenelements 54 erstreckende Rippe vorgesehen sein.

## Patentansprüche

1. Planenaufbau (2,50) eines Nutzfahrzeugs (1), insbesondere Lastwagens, Anhängers, Sattelaufliegers und/oder Wechselbehälters,
- mit einem Rahmenelement (10,34,54) und einem Verschlusselement (9,30,53) zum Verschließen des Planenaufbaus (2,50),
- wobei das Verschlusselement (9,30,53) am Rahmenelement (10,34,54) befestigt ist,
**dadurch gekennzeichnet,**
- **dass** ein Sicherungsmittel (15,37,51) vorgesehen ist, das beim Trennen des Verschlusselements (9,30,53) vom Rahmenelement (10,34,54) unter Hinterlassung sichtbarer Spuren beschädigt wird,
- **dass** das Sicherungsmittel (15,37,51) wenigstens ein am Planenaufbau (2,50) festgelegtes Verbindungsmittel (17,38,52) umfasst und
- **dass** das Verbindungsmittel (17,38,52) von einem Innenraum des Planenaufbaus (2,50) gesichert ist.

2. Planenaufbau nach Anspruch 1,
**dadurch gekennzeichnet,**
**dass** das wenigstens eine Verbindungsmittel (17,38,52) vom Laderaum (8) des Nutzfahrzeugs (1) aus gesichert ist.

3. Planenaufbau nach Anspruch 1,
**dadurch gekennzeichnet,**
**dass** das wenigstens eine Verbindungsmittel (17,38,52) oberhalb des Ladebodens (7) des Nutzfahrzeugs (1) angeordnet ist.

4. Planenaufbau nach einem der Ansprüche 1 bis 3,
**dadurch gekennzeichnet,**
**dass** das Verschlusselement (9,53) ein Krampenband zum Befestigen einer Plane (5) ist.

5. Planenaufbau nach einem der Ansprüche 1 bis 3,
**dadurch gekennzeichnet,**
**dass** das Verschlusselement (30) eine Durchgriffssicherung zum Verhindern des Durchgriffs durch den Planenaufbau (2,50) von außen in den Laderaum (8) des Nutzfahrzeugs (1) ist.

6. Planenaufbau nach Anspruch 5,
**dadurch gekennzeichnet,**
**dass** das Verschlusselement (30) ein Seil, vorzugsweise ein Stahlseil, ist.

7. Planenaufbau nach einem der Ansprüche 1 bis 6,
**dadurch gekennzeichnet,**
**dass** das wenigstens eine Verbindungsmittel (17,38,52) ein Vollniet, ein Bolzen, wie etwa ein Schließringbolzen, oder eine Schraube ist.

8. Planenaufbau nach einem der Ansprüche 1 bis 6,
**dadurch gekennzeichnet,**
**dass** das Sicherungsmittel (51) durch das Verbindungsmittel (52) gebildet wird.

9. Planenaufbau nach Anspruch 8,
**dadurch gekennzeichnet,**
**dass** das Verbindungsmittel (52) das Verschlusselement (53) und das Rahmenelement (54) miteinander verbindet.

10. Planenaufbau nach einem der Ansprüche 1 bis 7,
**dadurch gekennzeichnet,**
- **dass** das Verschlusselement (9,30) mit wenigstens einem Befestigungsmittel (13,36) am Rahmenelement befestigt ist,
- **dass** das Sicherungsmittel (15,37) eine das Befestigungsmittel (13,36) derart abdeckende Abdeckung (16,39) umfasst, dass ein Entfernen des Befestigungsmittels (13,36) von außen ohne sichtbare Beschädigung der Abdeckung (16,39) verhindert ist und
- **dass** die Abdeckung (16,39) über das wenigstens eine Verbindungsmittel (17,38) am Planenaufbau (2) festgelegt ist.

11. Planenaufbau nach Anspruch 10,
**dadurch gekennzeichnet,**
**dass** die Abdeckung (16) über das wenigstens eine Verbindungsmittel (17) am Verschlusselement (9) befestigt ist.

12. Planenaufbau nach Anspruch 10 oder 11,
**dadurch gekennzeichnet,**
**dass** die Abdeckung (39) über das wenigstens eine Verbindungsmittel (38) am Rahmenelement (34) befestigt ist.

13. Planenaufbau nach einem der Ansprüche 10 bis 12,
**dadurch gekennzeichnet,**
**dass** Befestigungsmittel (13,36,57) ein Blindniet oder eine Schraube ist.

14. Planenaufbau nach einem der Ansprüche 10 bis 13,
**dadurch gekennzeichnet,**
**dass** die Abdeckung (16,39) über das wenigstens eine Verbindungsmittel (17,38) einerseits und das Befestigungsmittel (13,36) andererseits am Planenaufbau (2), vorzugsweise am Verschlusselement (9,30) und/oder am Rahmenelement (10,34), festgelegt ist.

15. Planenaufbau nach einem der Ansprüche 10 bis 14,
**dadurch gekennzeichnet,**
**dass** das Sicherungsmittel (15,37) wenigstens zwei die Abdeckung (16,39) am Planenaufbau (2), vorzugsweise am Verschlusselement (9,30) und/oder am Rahmenelement (10,34), festlegende Verbindungsmittel (17,38) umfasst.

## Claims

1. Tarpaulin body (2, 50) of a commercial vehicle (1), in particular a lorry, trailer, semi-trailer and/or swap container,
- having a frame element (10, 34, 54) and a closure element (9, 30, 53) for closing the tarpaulin body (2, 50),
- the closure element (9, 30, 53) being attached to the frame element (10, 34, 54),
**characterised in that**
- a securing means (15, 37, 51) is provided, which is damaged when the closure element (9, 30, 53) is detached from the frame element (10, 34, 54) leaving behind visible marks,
- the securing means (15, 37, 51) comprises at least one connecting means (17, 38, 52) fixed to the tarpaulin body (2, 50) and
- the connecting means (17, 38, 52) is secured from an inner area of the tarpaulin body (2, 50).

2. Tarpaulin body according to Claim 1, **characterised in that** the at least one connecting means (17, 38, 52) is secured from the hold area (8) of the commercial vehicle (1).

3. Tarpaulin body according to Claim 1, **characterised in that** the at least one connecting means (17, 38, 52) is arranged above the hold floor (7) of the commercial vehicle (1).

4. Tarpaulin body according to any one of Claims 1 to 3, **characterised in that** the closure element (9, 53) is a staple bar for attaching a tarpaulin (5).

5. Tarpaulin body according to any one of Claims 1 to 3,
**characterised in that** the closure element (30) is an access securing means for preventing access through the tarpaulin body (2, 50) from outside into the hold area (8) of the commercial vehicle (1).

6. Tarpaulin body according to Claim 5, **characterised in that** the closure element (30) is a cable, preferably a steel cable.

7. Tarpaulin body according to any one of Claims 1 to 6,
**characterised in that** the at least one connecting means (17, 38, 52) is a solid rivet, a bolt, such as for example a locking ring bolt or a screw.

8. Tarpaulin body according to any one of Claims 1 to 6, **characterised in that** the securing means (51) is formed by the connecting means (52).

9. Tarpaulin body according to Claim 8, **characterised in that** the connecting means (52) connects the closure element (53) and the frame element (54) to each other.

10. Tarpaulin body according to any one of Claims 1 to 7, **characterised in that**
- the closure element (9, 30) is attached by means of at least one fastening means (13, 36) to the frame element,
- the securing means (15, 37) comprises a covering which covers the fastening means (13, 36) in such a way that removing the fastening means (13, 36) from the outside without visible damage to the covering is prevented and
- the covering (16, 39) is fixed to the tarpaulin body (2) via at least one connecting means (17, 38).

11. Tarpaulin body according to Claim 10, **characterised in that** the covering (16) is attached to the closure element (9) via at least one connecting means (17).

12. Tarpaulin body according to Claim 10 or 11, **characterised in that** the covering (39) is attached to the frame element (34) via at least one connecting element (38).

13. Tarpaulin body according to any one of Claims 10 to 12, **characterised in that** connecting means (13, 36, 57) is a blind rivet or a screw.

14. Tarpaulin body according to any one of Claims 10 to 13, **characterised in that** the covering (16, 39) is fixed, on the one hand, via the at least one connecting means (17, 38) and, on the other hand, via the fastening means (13, 36) to the tarpaulin body (2), preferably to the closure element (9, 30) and/or to the frame element (10, 34).

15. Tarpaulin body according to any one of Claims 10 to 14, **characterised in that** the securing means (15, 37) comprises at least two connecting means (17, 38) which fix the covering (16, 39) to the tarpaulin body (2), preferably to the closure element (9, 30) and/or to the frame element (10, 34).

## Revendications

1. Bâche (2, 50) d'un véhicule utilitaire (1), en particulier d'un camion, d'une remorque, d'un semi-remorque et/ou d'une benne mobile,
comprenant un élément de cadre (10, 34, 54) et un élément de fermeture (9, 30, 53) pour fermer la bâche (2, 50),
sachant que l'élément de fermeture (9, 30, 53) est fixé sur l'élément de cadre (10, 34, 54),
**caractérisé en ce**
**qu'**un moyen de sécurité (15, 37, 51) est prévu, qui est endommagé en laissant des traces visibles si l'on sépare l'élément de fermeture (9, 30, 53) de l'élément de cadre (10, 34, 54),
**que** le moyen de sécurité (15, 37, 51) comprend au moins un moyen de liaison (17, 38, 52) fixé sur la bâche (2, 50) et
**que** le moyen de liaison (17, 38, 52) est sécurisé par un espace intérieur de la bâche (2, 50).

2. Bâche selon la revendication 1, **caractérisée en ce que** l'au moins un moyen de liaison (17, 38, 52) est sécurisé depuis l'espace de chargement (8) du véhicule utilitaire (1).

3. Bâche selon la revendication 1, **caractérisée en ce que** l'au moins un moyen de liaison (17, 38, 52) est disposé au-dessus du sol de chargement (7) du véhicule utilitaire (1).

4. Bâche selon l'une des revendications 1 à 3, **caractérisée en ce que** l'élément de fermeture (9, 53) est une bande à crampons pour fixer une bâche (5).

5. Bâche selon l'une des revendications 1 à 3, **caractérisée en ce que** l'élément de fermeture (30) est une sécurité anti-pénétration pour éviter de pénétrer à travers la bâche (2, 50) depuis l'extérieur dans l'espace de chargement (8) du véhicule utilitaire (1).

6. Bâche selon la revendication 5, **caractérisée en ce que** l'élément de fermeture (30) est un câble, de préférence un câble d'acier.

7. Bâche selon l'une des revendications 1 à 6, **caractérisée en ce que** l'au moins un moyen de liaison (17, 38, 52) est un rivet plein, un boulon comme un boulon à sertir, ou une vis.

8. Bâche selon l'une des revendications 1 à 6, **caractérisée en ce que** le moyen de sécurité (51) est formé par le moyen de liaison (52).

9. Bâche selon la revendication 8, **caractérisée en ce que** le moyen de liaison (52) relie l'élément de fermeture (53) et l'élément de cadre (54) entre eux.

10. Bâche selon l'une des revendications 1 à 7, **caractérisée en ce que**
l'élément de fermeture (9, 30) est fixé sur l'élément de cadre avec au moins un moyen de fixation (13, 36),
l'élément de sécurité (15, 37) comprend un couvercle couvrant le moyen de fixation (13, 36) de sorte à empêcher d'enlever le moyen de fixation (13, 36) depuis l'extérieur sans endommagement visible du couvercle (16, 39) et
que le couvercle (16, 39) est fixé sur la bâche (2) par l'au moins un moyen de fixation (17, 38).

11. Bâche selon la revendication 10, **caractérisée en ce que** le couvercle (16) est fixé sur l'élément de fermeture (9) par l'au moins un moyen de liaison (17).

12. Bâche selon la revendication 10 ou 11, **caractérisée en ce que** le couvercle (39) est fixé sur l'élément de cadre (34) par l'au moins un moyen de liaison (38).

13. Bâche selon l'une des revendications 10 à 12, **caractérisée en ce que** le moyen de fixation (13, 36, 57) est un rivet-borgne ou une vis.

14. Bâche selon l'une des revendications 10 à 13, **caractérisée en ce que** le couvercle (16, 39) est fixé par l'au moins un moyen de liaison (17, 38) d'une part et le moyen de fixation (13, 36) d'autre part, sur la bâche (2), de préférence sur l'élément de fermeture (9, 30) et/ou sur l'élément de cadre (10, 34).

15. Bâche selon l'une des revendications 10 à 14, **caractérisée en ce que** le moyen de fixation (15, 37) comprend au moins deux moyens de fixation (17, 38) fixant le couvercle (16, 39) sur la bâche (2), de préférence sur l'élément de fermeture (9, 30) et/ou sur l'élément de cadre (10, 34).
